## Europäisches Patentamt

## European Patent Office

## Office européen des brevets

(11) Veröffentlichungsnummer: **0 185 299**
**B1**

(12) # EUROPÄISCHE PATENTSCHRIFT

(45) Veröffentlichungstag der Patentschrift:
27.01.88

(51) Int. Cl.⁴: **B 23 K 26/00**

(21) Anmeldenummer: **85115728.9**

(22) Anmeldetag: **10.12.85**

(54) Durchlaufführung für gerundete Zargen an einer Nahtschweissmaschine.

(30) Priorität: **19.12.84 CH 6003/84**

(43) Veröffentlichungstag der Anmeldung:
**25.06.86 Patentblatt 86/26**

(45) Bekanntmachung des Hinweises auf die Patenterteilung:
**27.01.88 Patentblatt 88/4**

(84) Benannte Vertragsstaaten:
**CH DE FR GB IT LI NL SE**

(56) Entgegenhaltungen:
**EP - A - 0 058 135**
**DE - B - 1 014 062**

(73) Patentinhaber: **ELPATRONIC AG, Baarerstrasse 117, CH-6300 Zug (CH)**

(72) Erfinder: **Opprecht, Paul, Herrenbergstrasse 10, CH-8962 Bergdietikon (CH)**
Erfinder: **Stieger, Othmar, Schuermattstrasse 18, CH-8963 Kindhausen (CH)**

(74) Vertreter: **Hotz, Klaus, Dipl.-El.-Ing. / ETH et al, c/o SOUDRONIC AG Industriestrasse 35 Postfach 11, CH-8962 Bergdietikon (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Durchlaufführung für gerundete Zargen an einer Maschine zum Verschweissen von Längsrändern der Zargen, mit mehreren Rollenkränzen, die rings um eine gemeinsame Längsachse in Durchlaufrichtung der Zargen hintereinander angeordnet sind und Rollen aufweisen, von denen mindestens einige an je einem Rollenträger gelagert sind, der in Richtung von der Längsachse weg gegen elastischen Widerstand verstellbar ist.

Bei einer bekannten Durchlaufführung dieser Gattung (DE-OS 33 30 171) sind die Rollenträger gabelartig ausgebildet und haben je einen Schaft, der sich radial von der gemeinsamen Längsachse der Rollenkränze wegerstreckt und in einer entsprechenden radialen Bohrung einer zangenartigen Halterung verschiebbar geführt ist. Rings um den Schaft jedes Rollenträgers ist eine Druckfeder angeordnet, die bestrebt ist, den Rollenträger radial nach innen, zur gemeinsamen Längsachse hin, zu drücken. Wenn durch diese bekannte Durchlaufführung Zargen aus Blech von geringer, beispielsweise 0,2 mm betragender Dicke in rascher Folge von beispielsweise 500 Zargen/min und dementsprechend hoher Geschwindigkeit hindurchbewegt werden, besteht die Gefahr, dass die in Durchlaufrichtung vorderen Kanten der Zargen von den Rollen beschädigt werden, da diese den Widerstand ihrer elastischen Abstützung nicht rasch genug überwinden können, um jeder einzelnen Zarge von Anfang an genügend ausweichen zu können. Um die Beschädigungen, welche die Rollen an den Vorderkanten der Zargen hinterlassen, wenigstens so gering zu halten, dass sie bei der Weiterverarbeitung der Zargen nicht stören und vor allem nicht zu Undichtigkeiten der fertigen Blechgebinde, beispielsweise Konservendosen führen, ist man bei der bekannten Durchlaufführung gezwungen, die Federkräfte, mit denen die Rollenträger abgestützt werden, entsprechend gering zu halten. Dies hat aber den Nachteil, dass es schwierig ist, die Längsränder der Zargen so sicher zu führen, dass sie sich zum Herstellen einer Quetschnahtschweissung genau um einen festgelegten Betrag von beispielsweise 0,5 mm überlappen. Um eine solche Überlappung herbeizuführen, werden die Blechränder bei der bekannten Durchlaufführung in Nuten einer Schiene mit Z-Profil geführt; dabei lässt sich die vorgesehene Überlappungsbreite nur dann einhalten, wenn jeder der Längsränder sicher am Grund der zugehörigen Nut der Schiene anliegt.

Entsprechendes gilt auch dann, wenn eine Durchlaufführung der eingangs beschriebenen Gattung an einer Maschine zum Stumpfschweissen der Längsränder gerundeter Zargen vorgesehen ist. In diesem Fall muss sogar besonders sorgfältig darauf geachtet werden, dass die an den elastisch abgestützten Rollenträgern wirksamen Federkräfte genügend gross sind, damit die Kanten der Längsränder in der Schweisszone mit ausreichendem Druck aneinanderliegen.

Der Erfindung liegt deshalb die Aufgabe zugrunde, bei einer Durchlaufführung der eingangs beschriebenen Gattung die Vorderkanten der Zargen vor Beschädigungen auch dann zu schützen, wenn die von den Rollen auf die Zargen ausgeübten, im wesentlichen radialen Kräfte ausreichend gross sind, um eine einwandfreie Verschweissung der einander überlappenden oder stumpf aufeinanderstossenden Längsränder zu ermöglichen.

Die Aufgabe ist erfindungsgemäss dadurch gelöst, dass die Rollenträger in einer Weise geführt sind, die den Rollen Ausweichbewegungen unter einem Winkel von 80 bis 45° zur Durchlaufrichtung der Zargen ermöglicht. Mit anderen Worten sind die Rollenträger so geführt, dass die Ausweichbewegungen nicht wie bisher in rein radialer Richtung stattfinden, sondern eine nennenswerte, zur Durchlaufrichtung der Zargen parallele Komponente haben.

Es hat sich herausgestellt, dass die erfindungsgemässe Führung der Rollenträger wesentlich dazu beiträgt, Beschädigungen an den Vorderkanten der Zargen zu vermeiden und ausserdem die beim Aufprall der Vorderkanten der Zargen auf die Rollen entstehenden Vibrationen zu vermindern.

Die erfindungsgemässe Durchlaufführung wird vorzugsweise derart ausgeführt, dass die Rollenträger um je eine Querachse schwenkbar sind, die mindestens annähernd parallel zur zugehörigen Rollenachse stromaufwärts von dieser, bezüglich der Durchlaufrichtung der Zargen, angeordnet ist.

Diese Ausführungsform der Erfindung ist zweckmässigerweise dadurch weitergebildet, dass die Rollenträger zweiarmige Hebel sind, von denen je ein Arm über eine Feder an einem Federeinstellglied abgestützt, und der andere Arm einem einstellbaren Anschlag zugeordnet ist.

Die schwenkbare Anordnung der Rollenträger kann ferner dadurch weitergebildet sein, dass die Querachse, um die jeder der genannten Rollenträger schwenkbar ist, und die zugehörige Rollenachse in einer gemeinsamen Ebene liegen, die mit der gemeinsamen Längsachse der Rollenkränze einen Winkel von 10 bis 45° einschliesst.

Die erfindungsgemässe Durchlaufführung kann ebenso wie die beschriebene bekannte Durchlaufführung eine parallel zur Längsachse verlaufende Schiene aufweisen, an der Führungsflächen für die Längsränder der Zargen ausgebildet sind. Für diesen Fall ist die Erfindung vorzugsweise derart ausgeführt, dass nur diejenigen Rollen, die der Schiene nicht unmittelbar benachbart sind, an einem schwenkbaren Rollenträger, die übrigen Rollen hingegen starr gelagert sind. Die starre Lagerung der übrigen Rollen schliesst allerdings nicht aus, dass diese radial zur gemeinsamen Längsachse einstellbar sind; es kommt nur darauf an, dass diese Rolle bei gegebener Einstellung den Zargen nicht ausweichen können.

Schliesslich kann die Erfindung dadurch weitergebildet sein, dass die Führungsflächen in einer gemeinsamen, die Längsachse enthaltende Ebene liegen, dass stromabwärts von der Schiene zwischen starr gelagerten Rollen zwei Gleitschuhe angeordnet sind, zwischen denen die Längsränder der Zargen zum Stumpfnahtschweissen hindurchbewegbar sind, und dass einer der Gleitschuhe eine mittige Aussparung für den Durchtritt eines Laserstrahls aufweist und an einem Hebel ausgebildet ist, der um eine stromaufwärts von der Aussparung angeordnete Querachse schwenkbar und elastisch zu dem anderen Gleitschuh hin vorgespannt ist. In diesem Fall wird das erfindungsgemässe Führungsprinzip auf den elastisch abgestützten Gleitschuh in entsprechender Weise angewandt wie auf die elastisch abgestützten Rollenträger.

Ein Ausführungsbeispiel der Erfindung wird im folgenden anhand schematischer Zeichnungen mit weiteren Einzelheiten erläutert. Es zeigt:

Fig. 1 eine teilweise als Axialschnitt gezeichnete Seitenansicht von Teilen einer erfindungsgemässen Durchlaufführung,

Fig. 2 den Querschnitt II-II in Fig. 1,

Fig. 3 den Querschnitt III-III in Fig. 1,

Fig. 4 den Axialschnitt IV-IV in Fig. 3, und

Fig. 5 eine Einzelheit aus Fig. 4.

Die dargestellte Durchlaufführung ist eine Baugruppe einer im übrigen nicht dargestellten Nahtschweissmaschine zum Verarbeiten zylindrisch gerollter Zargen 10 aus Blech, insbesondere Weissblech von 0,17 bis 0,30 mm Dicke. Die Zargen 10 werden der Durchlaufführung in kurzen Abständen hintereinander in einer Folge von beispielsweise 300 Stück/min und einer Geschwindigkeit von beispielsweise 10 bis 15 m/min zugeführt. Jede Zarge 10 hat zwei Längsränder 12 und 14, die sich im rechten Winkel zu einer Vorderkante 16 erstrecken.

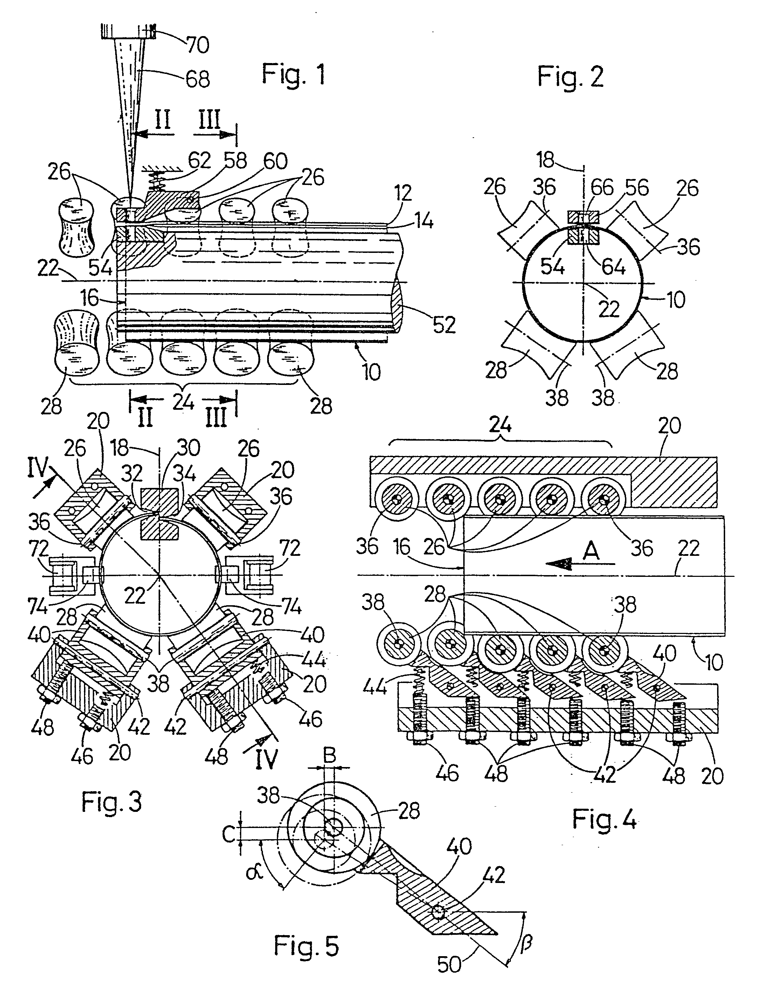

Die Durchlaufführung hat die Aufgabe, jede Zarge 10 so zu führen, dass ihre beiden Längsränder 12 und 14 genau in einer axialen Ebene 18 liegen, die im dargestellten Beispiel senkrecht ist. Dabei sind die beiden Längsränder 12 und 14 anfangs, wie aus dem rechten Teil der Fig. 1 sowie aus Fig. 3 ersichtlich ist, in der axialen Ebene 18 radial gegeneinander versetzt und werden dann so geführt, dass sie, wie besonders aus Fig. 2 ersichtlich — einander in der Ebene 18 unmittelbar gegenüber- und aneinander anliegen, um so stumpf miteinander verschweisst zu werden.

Die Durchlaufführung hat ein im wesentlichen hohlzylindrisches Gehäuse 20 mit einer im dargestellten Beispiel waagerechten Längsachse 22 rings um die mehrere — im dargestellten Beispiel fünf — Rollenkränze 24 in geringen axialen Abständen angeordnet sind. Jeder Rollenkranz 24 weist ein Paar oberen Rollen 26 und ein Paar untere Rollen 28 auf, die sämtlich diaboloartig gestaltet sind. Zwischen den beiden oberen Rollen 26 des in Fig. 1 und 4 von rechts aus gezählt zweiten Rollenkranzes 24 endet eine rechts ausserhalb der Bildfläche dieser Figuren beginnende Schiene 30, die zwei voneinander abgewandte, zur Längsachse 22 parallele Nuten 32 und 34 aufweist. Die beiden Nuten 32 und 34 haben je einen in der Ebene 18 liegenden Nutgrund; die Rollenkränze 24 im Bereich der Schiene 30 führen die Längsränder 12 und 14 jeder Zarge 10 derart, dass sie am zugehörigen Nutgrund anliegen und somit in der axialen Eben 18 gehalten sind.

Die Rollen 26 und 28 haben Rollenachsen 36 bzw. 38, die sich mit Abstand von der Längsachse 22 im rechten Winkel zu dieser erstrecken. Der Abstand der oberen Rollenachsen 36 von der Längsachse 22 ist im Betrieb unveränderlich, lässt sich jedoch für die Verarbeitung von Zargen 10 unterschiedlichen Durchmessers einstellen.

Die unteren Rollenachsen 38 sind an je einem gabelförmigen, in bezug auf die Längsachse 22 radial inneren Ende, je eines Rollenträgers 40 befestigt. Jeder dieser Rollenträger 40 ist als zweiarmiger Hebel ausgebildet und auf einer Querachse 42 gelagert, die im Gehäuse 20 befestigt ist und sich parallel zur zugehörigen Rollenachse 38 und somit ebenfalls im rechten Winkel zur Längsachse 22 erstreckt. Jede der Querachsen 42 ist gegenüber der zugehörigen Rollenachse 38 radial nach aussen und in bezug auf die Durchlaufrichtung A der Zargen 10 stromaufwärts versetzt angeordnet. Die Rollenträger 40 wirken somit wie Schlepphebel.

Der Arm jedes Rollenträgers 40, auf dem die zugehörige Rolle 28 gelagert ist, stützt sich über eine Feder 44 an einem Federeinstellglied 46 in Gestalt einer in das Gehäuse 20 radial eingeschraubten Stellschraube ab. Dem anderen Arm jedes Rollenträgers 40 ist ein einstellbarer Anschlag 48 zugeordnet, der ebenfalls von einer radial in das Gehäuse 20 eingeschraubten Stellschraube gebildet ist.

Die Anschläge 48 sind derart eingestellt, dass sämtliche Rollenträger 40 im Ruhezustand, vor der Ankunft einer Zarge 10, eine Stellung einnehmen, wie sie in Fig. 4 für den in Durchlaufrichtung A vierten und fünften Rollenträger 40 dargestellt ist. In dieser Stellung schliesst die gemeinsame Ebene 50 der Rollenachse 38 und der Querachse 42 des betreffenden Rollenträgers 40 mit der Längsachse 22 einen Winkel $\beta$ von 10 bis 45° ein; dies bedeutet, dass die Tangente des Kreisbogens, auf dem sich die zugehörige Rollenachse 36 bei Auslenkung aus der Ruhestellung bewegt, mit der Längsachse 22 den Komplementärwinkel $\alpha = 90 - \beta$, also im vorliegenden Beispiel von 80 bis 45° einschliesst.

Innerhalb des Gehäuses 20 und gleichachsig mit diesem erstreckt sich ein ortsfester Dorn 52, der rechts ausserhalb der Bildfläche von Fig. 1 und 4 an einem Maschinenständer befestigt ist. Der Dorn 52 trägt an seinem freien, in Fig. 1 und 4 linken Ende einen radial inneren, ortsfesten Gleitschuh 54, dem ein radial äusserer Gleitschuh 56 gegenübersteht. Der radial äussere Gleitschuh 56 ist an einem Hebel 58 ausgebildet, der um eine mit Abstand im rechten Winkel zur Längsachse 22 verlaufende Querachse 60 schwenkbar im Gehäuse 20 gelagert und durch eine Feder 62 derart belastet ist, dass der äussere Gleitschuh 56 zum inneren Gleitschuh 54 hin vorgespannt ist.

Die beiden Gleitschuhe 54 und 56 haben je eine Aussparung 64 bzw. 66 von kreisförmigen Querschnitt, die sich miteinander gleichachsig radial zur Längsachse 22 erstrecken. Die Aussparung 66 des äusseren Gleitschuhs 56 hat die Aufgabe, einem Laserstrahl 68, der von einer Schweissvorrichtung 70 ausgeht, Zutritt zu den stumpf aneinanderliegenden Längsrändern 12 und 14 der Zarge 10 zu gewähren; die Aussparung 64 des inneren Gleitschuhs 54 verhindert, dass dieser vom Laserstrahl 68 übermässig erhitzt wird. Beide Gleitschuhe 54 und 56 sorgen gemeinsam dafür, dass die beiden Längsränder 12 und 14 beim Schweissen strumpf aneinanderliegen und bei der stetig fortgesetzten Vorwärtsbewegung der Zarge 10 in Richtung des Pfeiles A leicht gequetscht werden, wodurch die Sicherheit erhöht wird, dass die Schweissnaht vollständig dicht ist.

Jede Zarge 10 muss, ehe ihre Vorderkante 16 die Schweisszone erreicht, die beweglichen unteren Rollen 28 sämtlicher Rollenkränze 24 aus ihrer Ruhestellung in eine radial äussere Stellung verdrängen, die in Fig. 4 für die erste bis dritte Rolle 28 gezeichnet ist. Die Bewegung, die von den Rollenachsen 38 dabei ausgeführt wird, hat eine zur Längsachse 22 parallele Komponente B und eine radiale Komponente C, wie in Fig. 5 dargestellt. Die Bewegungskomponente C ist erforderlich, um der Zarge 10 Durchlass zu gewähren.

Die Bewegungskomponente B ergibt sich aus dem gewählten Winkel β und bedeutet, dass die betreffende untere Rolle 28 der Bewegung der Zarge 10, von der sie verdrängt wird, ein Stück weit folgt. Es hat sich herausgestellt, dass diese Bewegungskomponente B wesentlich dazu beiträgt, den Stoss zu mildern, der jeweils dann entsteht, wenn die Vorderkante 16 einer Zarge 10 gegen eine der unteren Rollen 28 stösst, wie in Fig. 4 für die in Durchlaufrichtung A vierte Rolle 28 dargestellt ist.

Für die Bewegung der Zargen in Durchlaufrichtung A sorgen zwei Förderketten 72, an denen Mitnehmer 74 befestigt sind.

**Patentansprüche**

1. Durchlaufführung für gerundete Blechgebinde-Zargen (10) an einer Maschine zum Verschweissen von Längsrändern (12, 14) der Zargen (10), mit mehreren Rollenkränzen (24), die rings um eine gemeinsame Längsachse (22) in Durchlaufrichtung (A) der Zargen (10) hintereinander angeordnet sind und Rollen (26, 28) aufweisen, von denen mindestens einige (28) an je einem Rollenträger (40) gelagert sind, der in Richtung von der Längsachse (22) weg gegen elastischen Widerstand verstellbar ist, dadurch gekennzeichnet, dass die Rollenträger (40) in einer Weise geführt sind, die den zugehörigen Rollen (28) Ausweichbewegungen unter einem Winkel (α) von 80 bis 45° zur Durchlaufrichtung (A) der Zargen (10) ermöglicht.

2. Durchlaufführung nach Anspruch 1, dadurch gekennzeichnet, dass die Rollenträger (40) um je eine Querachse (42) schwenkbar sind, die mindestens annähernd parallel zur zugehörigen Rollenachse (38) stromaufwärts von dieser, bezüglich der Durchlaufrichtung (72) der Zargen (10), angeordnet ist.

3. Durchlaufführung nach Anspruch 2, dadurch gekennzeichnet, dass die Rollenträger (40) zweiarmige Hebel sind, von denen je ein Arm über eine Feder (44) an einem Federeinstellglied (46) abgestützt, und der andere Arm einem einstellbarem Anschlag (48) zugeordnet ist.

4. Durchlaufführung nach Anspruch 2 oder 3, dadurch gekennzeichnet, dass die Querachse (42) und die zugehörige Rollenachse (38) in einer gemeinsamen Ebene (50) liegen, die mit der gemeinsamen Längsachse (22) der Rollenkränze (24) einen Winkel (β) von 10 bis 45° einschliesst.

5. Durchlaufführung nach einem der Ansprüche 1 bis 4 mit einer parallel zur Längsachse (22) verlaufenden Schiene (30), an der Führungsflächen für die Längsränder (12, 14) der Zargen (10) ausgebildet sind, dadurch gekennzeichnet, dass nur diejenigen Rollen (28), die der Schiene (30) nicht unmittelbar benachbart sind, an einem schwenkbaren Rollenträger (40), die übrigen Rollen (26) hingegen starr gelagert sind.

6. Durchlaufführung nach Anspruch 5, dadurch gekennzeichnet, dass die Führungsflächen der Schiene (30) in einer gemeinsamen, die Längsachse (22) enthaltenden Ebene (18) liegen, dass stromabwärts von der Schiene (30) zwischen starr gelagerten Rollen (26) zwei Gleitschuhe (54, 56) angeordnet sind, zwischen denen die Längsränder (12, 14) der Zargen (10) zum Stumpfnahtschweissen hindurchbewegbar sind, und dass einer der Gleitschuhe (56) eine mittige Aussparung (64) für den Durchtritt eines Laserstrahls (68) aufweist und an einem Hebel (58) ausgebildet ist, der um eine stromaufwärts von der Aussparung (64) angeordnete Querachse (60) schwenkbar und elastisch zu dem anderen Gleitschuh (54) hin vorgespannt ist.

**Claims**

1. Pass-through guiding device for tubular blanks (10) on a machine for the welding of longitudinal edges (12, 14) of the blanks (10), with a plurality of roller rings (24) which are situated around a common longitudinal axis (22) one behind the other in the through travel direction (A) of the blanks (10) and have rollers (26, 28) of which at least some (28) are mounted each on a roller support (40) which is adjustable in the direction away from the longitudinal axis (22) in opposition to elastic resistance, characterised in that the roller supports (40) are guided in a manner which allows the associated rollers (28) to carry out yielding movements at an angle (α) of 80 to 45° relatively to the through travel direction (A) of the blanks (10).

2. Pass-through guiding device according to claim 1, characterised in that the roller supports (40) are pivotable each about a transverse axis (42) which is arranged at least approximately parallel to the associated roller axis (38) upstream of the latter in relation to the through travel direction (72) of the blanks (10).

3. Pass-through guiding device according to claim 2, characterised in that the roller supports (40) are two-armed levers whereof one arm in each case is supported via a spring (44) on a spring adjustment element (46), and the other arm is associated with an adjustable abutment (48).

4. Pass-through guiding device according to claim 2 or 3, characterised in that the transverse axis (42) and the associated roller axis (38) are situated in a common plane (50) which forms an angle ($\beta$) of 10 to 45° with the common longitudinal axis (22) of the roller rings (24).

5. Pass-through guiding device according to one of claims 1 to 4, with a rail (30) which is disposed parallel to the longitudinal axis (22) and on which guide surfaces are provided for the longitudinal edges (12, 14) of the blanks (10), characterised in that only those rollers (28) which are not directly adjacent the rail (30) are mounted on a pivotable roller support (40) whereas the other rollers (26) are mounted rigidly.

6. Pass-through guiding device according to claim 5, characterised in that the guide surfaces of the rail (30) are situated in a common plane (18) containing the longitudinal axis (22), that downstream of the rail (30) between rigidly mounted rollers (26) two skids (54, 56) are provided between which the longitudinal edges (12, 14) of the blanks (10) are adapted to be moved through for butt seam welding, and that one of the skids (56) has a central aperture (64) for the through passage of a laser beam (68) and is formed on a lever (58) which is pivotable about a transverse axis (60) arranged upstream of the aperture (64) and is preloaded elastically towards the other skid (54).

## Revendications

1. Dispositif de guidage ininterrompu en tôle (10) dans une machine de soudage des bords longitudinaux (12, 14) des corps (10), comportant plusieurs couronnes de galets (24), qui sont disposées autour d'un axe longitudinal commun (22) dans la direction (A) du déplacement des corps (10) les uns derrière les autres et sont pourvus de galets (26, 28), dont au moins certains (28) sont montés sur un support de galets (40) qui est ajustable dans la direction de l'axe longitudinal (22) à l'encontre d'une résistance élastique, caractérisé en ce que les supports de galets (40) sont guidés de manière à permettre aux galets correspondants (28) des déplacements d'écartements sous un angle ($\alpha$) de 80 à 45° par rapport à la direction de déplacement (A) des corps (10).

2. Dispositif de guidage ininterrompu selon la revendication 1, caractérisé en ce que les supports de galets (40) sont montés oscillants autour d'un axe transversal (42), qui est au moins approximativement parallèle à l'axe correspondant (38) des galets et en amont de celui-ci par rapport à la direction (A) du déplacement des corps (10).

3. Dispositif de guidage ininterrompu selon la revendication 2, caractérisé en ce que les supports de galets (40) sont des leviers à deux bras, dont chaque bras prend appui sur un organe de réglage élastique (46) par l'intermédiaire d'un ressort (44), et l'autre bras est associé à une butée réglable (48).

4. Dispositif de guidage ininterrompu selon l'une des revendications 2 et 3, caractérisé en ce que l'axe transversal (42) et l'axe (38) des galets correspondants se trouvent dans un plan commun (50), qui délimite avec l'axe longitudinal commun (22) de la couronne de galets (24) un angle ($\beta$) de 10 à 45°.

5. Dispositif de guidage ininterrompu selon l'une des revendications 1 à 4, comportant un rail (30) parallèle à l'axe longitudinal (22), sur lequel sont formées des surfaces de guidage pour les bords longitudinaux (12, 14) des corps (10), caractérisé en ce que seulement les galets (28), non contigus au rail (30), sont montés rigidement sur un support oscillant (40), tandis que les autres galets (26) sont au contraire montés rigidement.

6. Dispositif de guidage ininterrompu selon la revendication 5, caractérisé en ce que les surfaces de guidage du rail (30) se trouvent dans un plan commun (18) qui contient l'axe longitudinal (22), en ce que deux patins de guidage (54, 56) sont disposés en aval du rail (30) entre deux galets montés rigidement, entre lesquels les bords longitudinaux (12, 14) des corps (10) peuvent être déplacés pour un soudage bord à bord, et en ce que l'un des patins de guidage (56) présente une découpe (64) pour le passage d'un rayon laser (68) et est monté sur un levier (58), lequel est monté oscillant de manière précontrainte autour d'un axe transversal situé en amont de la découpe (54), et de manière élastique par rapport à l'autre patin de guidage (54).

Fig. 1

Fig. 2

Fig. 3

Fig. 4

Fig. 5